# EUROPEAN PATENT APPLICATION

(11) **EP 4 779 398 A1**
(43) Date of publication of application: **22.07.2026**
(21) Application number: 24864139.1
(22) Date of filing: 07.06.2024
(51) Int. Cl.: G02F 1/1685

(54) **ELECTRONIC PAPER SCREEN**

(30) Priority: 11.09.2023 CN 202322490210 U
(71) Applicant: Hanshow Technology Co., Ltd., Jiaxing, Zhejiang 314031 (CN)
(72) Inventor: LI, Yanchen, Jiaxing, Zhejiang 314031 (CN); TIAN, Xiang, Jiaxing, Zhejiang 314031 (CN); ZHAO, Jianguo, Jiaxing, Zhejiang 314031 (CN); HOU, Shiguo, Jiaxing, Zhejiang 314031 (CN)
(74) Representative: IP TRUST SERVICES
(86) International application number: PCT/CN2024/098047
(87) International publication number: WO 2025/055414

(57) **Abstract**

An electronic paper screen, comprising an electronic paper module, a TFT substrate (01), an NFC coil (02), a driving chip, and an NFC control circuit; the TFT substrate (01) is successively provided with a first display area (03), a second display area (04) and a peripheral area (05) from inside to outside: the NFC coil (02) is arranged in the peripheral area (05) and the second display area (04), or is arranged in the first display area (03), the second display area (04) and the peripheral area (05); the NFC coil (02) is used for receiving an NFC control signal; the NFC control circuit is connected to the NFC coil (02), and is used for controlling, according to the NFC control signal, the electronic paper module to perform a corresponding operation; the driving chip is arranged on the TFT substrate (01), and is used for converting a received control time sequence and a received data signal into a voltage and a time sequence for driving the electronic paper module to refresh.

## Description

### CROSS-REFERENCE TO RELATED APPLICATIONS

The present application claims priority to the Chinese patent application for utility model No. 202322490210.0, and filed on September 11, 2023, the entire disclosure of which is incorporated by reference as a part of the present application.

### TECHNICAL FIELD

The present disclosure relates to the technical field of digital retail, in particular to an electronic paper screen.

### BACKGROUND

This section is intended to provide the background or context for the embodiments of the present disclosure stated in the claims. The descriptions herein are not recognized as the prior art just because they are included in this section.

In order to achieve various functions such as rapid networking and short-range refreshing, NFC (Near Field Communication) is increasingly widely employed in electronic shelf label products. Currently, most products integrate the NFC coil onto FPC (Flexible Printed Circuit) or PCB (Printed Circuit Board) to enable the NFC functions of electronic shelf labels. However, since the NFC performance is closely related to the size of the coil, the NFC coil needs to meet certain size requirements to ensure good NFC performance. This results in the need for a relatively large-sized FPC or PCB, which in turn makes the electronic shelf labels bulkier and increases the cost associated with the FPC or PCB.

Compared with the integration of the NFC coil on the FPC or PCB, integrating the NFC functions on a TFT (Thin Film Transistor) substrate not only allows for a lighter and thinner design of the electronic shelf labels, but also effectively reduces their costs. Therefore, solutions that integrate the NFC coil on a TFT substrate have been increasingly proposed. Among various proposed solutions, a typical approach is to provide the NFC coil in a peripheral area (non-display area) of the TFT substrate to achieve the NFC functions. Although this solution can implement the structure of the NFC coil, it offers limited design freedom, resulting in suboptimal NFC performance and difficulties in customizing and developing high-performance NFC coils for specific products.

### SUMMARY

The embodiments of the present disclosure provide an electronic paper screen to increase the degree of freedom in the design of an NFC coil in the electronic paper screen, and to improve the NFC performance of the electronic paper screen as well as the applicability of the electronic paper screen. The electronic paper screen comprises:
an electronic paper module, a TFT substrate, an NFC coil, a driver chip, and an NFC control circuit;
wherein the TFT substrate is successively provided, from inside to outside, with a first display area, a second display area, and a peripheral area; the NFC coil is arranged in the peripheral area and the second display area, or disposed in the first display area, the second display area and the peripheral area; the first display area and the second display area form a display area of the TFT substrate;
the NFC coil is used for receiving an NFC control signal;
the NFC control circuit is connected to the NFC coil, and is used for controlling, according to the NFC control signal, the electronic paper module to perform a corresponding operation; and
the driver chip is disposed on the TFT substrate, and is used for converting a received control timing and a received data signal into a voltage and a timing for driving the electronic paper module to refresh.

Further, each end of the NFC coil passes through the peripheral area, and penetrates into the second display area, or into the second display area and the first display area, forming a trace in which both ends of the coil are connected to the NFC control circuit.

Further, the NFC coil penetrates into the second display area, or into the second display area and the first display area, in the following way:
penetrating into the second display area, or into the second display area and the first display area, from a side of the second display area that is parallel to a long side of the driver chip; or
penetrating into the second display area, or into the second display area and the first display area, from a side of the second display area that is perpendicular to the long side of the driver chip.

The electronic paper screen in the embodiments of the present disclosure is provided with an electronic paper module, a TFT substrate, an NFC coil, a driver chip, and an NFC control circuit. The TFT substrate is successively provided, from inside to outside, with a first display area, a second display area, and a peripheral area. The NFC coil is arranged in the peripheral area and the second display area, or disposed in the first display area, the second display area, and the peripheral area. The first display area and the second display area form a display area of the TFT substrate. The NFC coil is used for receiving an NFC control signal. The NFC control circuit is connected to the NFC coil, and is used for controlling, according to the NFC control signal, the electronic paper module to perform a corresponding operation. The driver chip is disposed on the TFT substrate, and is used for converting a received control timing and a received data signal into a voltage and a timing for driving the electronic paper module to refresh. Compared with prior art that disposes the NFC coil only in the peripheral area of the TFT substrate, disposing the NFC coil in both the display area and the peripheral area of the TFT substrate can enhance the design freedom of the NFC coil in the electronic paper screen. This approach allows for the flexible configuration of various parameters of the NFC coil based on usage requirements, effectively improving the structure of the electronic paper screen. It also facilitates the customization and development of high-performance NFC coils for specific products, thereby effectively enhancing both the NFC performance of the electronic paper screen and its applicability.

### BRIEF DESCRIPTION OF DRAWINGS

In order to more clearly illustrate the technical solutions in the embodiments of the present disclosure or in the prior art, the drawings required for describing the embodiments or the prior art will be briefly introduced below. Obviously, the drawings described below only illustrate some embodiments of the present disclosure. For a person of ordinary skill in the art, other drawings may also be obtained based on these drawings without paying creative efforts. In the drawings:
FIG. 1 is a specific schematic diagram of a vertical structure of an electronic paper screen in the prior art in an embodiment of the present disclosure;
FIG. 2A is a specific schematic diagram of an electronic paper screen in the prior art in an embodiment of the present disclosure;
FIG. 2B is a schematic structural diagram of a TFT substrate of an electronic paper screen in an embodiment of the present disclosure;
FIG. 3 is a specific schematic diagram of an electronic paper screen in an embodiment of the present disclosure;
FIG. 4 is a specific schematic diagram of an electronic paper screen in an embodiment of the present disclosure;
FIG. 5 is a specific schematic diagram of an electronic paper screen in an embodiment of the present disclosure;
FIG. 6 is a specific schematic diagram of an electronic paper screen in an embodiment of the present disclosure;
FIG. 7 is a specific schematic diagram of an electronic paper screen in an embodiment of the present disclosure;
FIG. 8 is a specific schematic diagram of an electronic paper screen in an embodiment of the present disclosure;
FIG. 9 is a specific schematic diagram of an electronic paper screen in an embodiment of the present disclosure;
FIG. 10 is a schematic structural diagram of an electronic paper screen in an embodiment of the present disclosure.

### DESCRIPTION OF EMBODIMENTS

To make the object, technical solutions and advantages of the present disclosure clearer, further detailed descriptions of the embodiments of the present disclosure are given below with reference to the figures. Here, the exemplary embodiments of the present disclosure and the descriptions thereof are used for explaining the present disclosure, but not for limiting the present disclosure.

The term "and/or" used herein merely describes an association relationship, indicating that three relationships may exist. For example, A and/or B may indicate: A exists alone, both A and B exist, or B exists alone. Furthermore, the term "at least one" used herein indicates any one of a plurality of obj ects, or any combination of at least two of a plurality of obj ects. For example, including at least one of A, B, and C may indicate that any one or more elements selected from a set consisting of A, B, and C are included.

In the descriptions given in the present disclosure, the "include", "comprise", "have", "contain", etc. that are used are all open-ended type expressions intended to indicate "including but not limited to". The descriptions given with reference to the terms "one embodiment", "one specific embodiment", " some embodiments", "for example", etc. are intended to indicate that the specific features, structures, or characteristics described in conjunction with the embodiment(s) or example(s) are included in at least one embodiment or example of the present disclosure. In the present disclosure, the illustrative expressions of the above-mentioned terms do not necessarily refer to the same embodiment(s) or example(s). Furthermore, the specific features, structures, or characteristics that are described may be combined in an appropriate manner in any one or more embodiments or examples. The sequence of steps involved in each embodiment is used to illustratively describe the implementation of the present application. The sequence of steps is not limited and can be appropriately adjusted on demand.

The embodiments of the present disclosure involve the following nouns, which are explained in the following:
TFT: thin film transistor;
Pixel: pixel;
NFC: near field communication;
AA area: active area.

In order to achieve various functions such as rapid networking and short-range refreshing, NFC is increasingly widely employed in electronic shelf label products. Currently, most products integrate the NFC coil onto FPC or PCB to enable the NFC functions of electronic shelf labels. However, since the NFC performance is closely related to the size of the coil, the NFC coil needs to meet certain size requirements to ensure good NFC performance. This results in the need for a relatively large-sized FPC or PCB, which in turn makes the electronic shelf labels bulkier and increases the cost associated with the FPC or PCB.

Compared with the integration of the NFC coil on the FPC or PCB, integrating the NFC functions on a TFT substrate not only allows for a lighter and thinner design of the electronic shelf labels, but also effectively reduces their costs.

Therefore, solutions that integrate the NFC coil on a TFT substrate have been increasingly proposed. Among various proposed solutions, a typical approach is to provide the NFC coil in a peripheral area (non-display area) of the TFT substrate to achieve the NFC functions.

Although this solution can implement the structure of the NFC coil, it offers limited design freedom, resulting in suboptimal NFC performance and difficulties in customizing and developing high-performance NFC coils for specific products.

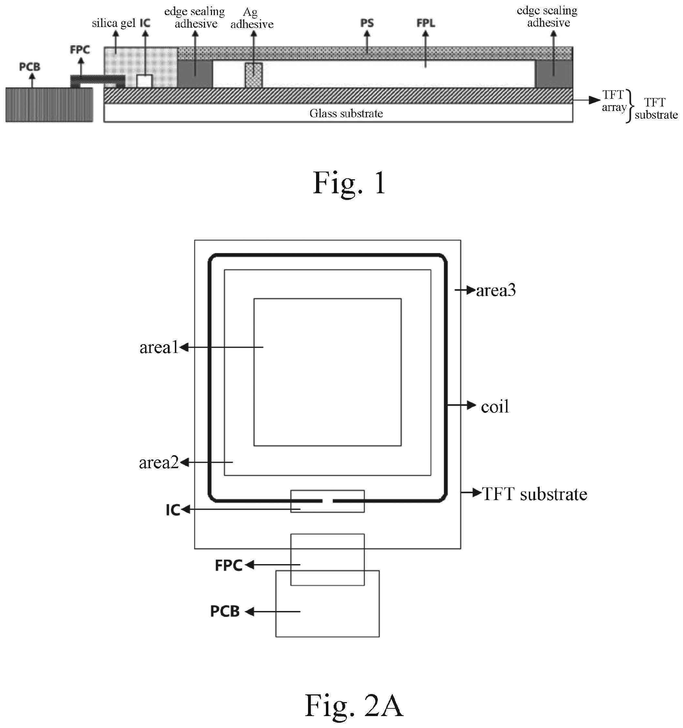

In one example, FIG. 1 shows a vertical structure diagram of an existing electronic paper screen. As shown in FIG. 1, the electronic paper screen mainly comprises the following parts:
1. A TFT substrate (including, for example, a TFT array and a Glass substrate): through processes such as coating, exposure, development, and etching, a pixel array and a drive circuit are formed on the Glass substrate to achieve driving control of the TFT array.
2. An Ag adhesive point: it is provided between the TFT substrate and an FPL (Front Plane Laminate), and a VCOM electrode on the TFT substrate and a VCOM ITO electrode on the FPL are connected via an Ag adhesive. The main component of the Ag adhesive point is a conductive silver adhesive.
3. An FPL: it is used to display an image actually seen by human eyes, the FPL is adhered onto the TFT substrate, and an electric field is formed between a Pixel electrode on the TFT substrate and the VCOM ITO electrode on the FPL to drive an electronic ink in the FPL to display the image.
4. A PS protective film: it is adhered onto the FPL and is larger in size than the FPL, and an edge of it is wrapped around the FPL for protecting the FPL and isolating moisture.
5. An IC (Integrated Circuit): it receives a signal transmitted from an external circuit through the FPC and converts the signal into a voltage and a timing for driving the electronic paper screen to refresh.
6. An FPC: it is used for connecting an external PCB circuit to the electronic paper screen to achieve signal transmissions between the external PCB circuit and the electronic paper screen.
7. An edge sealing adhesive: it is applied to the edges around the PS to fill a gap between the PS and the TFT to further isolate moisture.
8. A silica gel: it is provided in a lower border area of the TFT substrate for protecting a trace and the IC on the TFT substrate, as well as the FPC.
9. A PCB: it is an external control circuit for providing a power supply, a control timing, a data signal, etc. for the screen.

FIG. 2A shows a planar structure diagram of an NFC coil of an existing electronic paper screen. For ease of description, only the TFT substrate, IC, FPC, and PCB, which are related to the NFC functions, are shown in the planar structure diagram.

As shown in FIG. 2A, the TFT substrate is provided with a display area formed by an area 1 and an area 2, and a peripheral area formed by an area 3. The display area has a display function for displaying a specific color or image. The peripheral area is a non-display area that does not have a display function but is mainly used for the provision of a trace, a drive circuit, and functional modules such as the IC and FPC. The area 1, area 2 and area 3 are specifically explained as follows:
1. The area 1 is a first display area of the TFT substrate, and is also called an AA area. The shape of the area 1 may be, for example, a rectangle formed by an M×N pixel array in which each pixel can be independently controlled to achieve the display of a specific color.
2. The area 2 is a second display area of the TFT substrate, and is also called a Border area. The shape of the area 2 may be, for example, a closed loop whose inner and outer edges are both rectangular. The area 2 is provided with a single-piece closed-loop ITO (Indium-Tin-Oxide) electrode, and by controlling the voltage of this ITO electrode, the area 2 is controlled as a whole to achieve the display of a specific color.
3. The area 3 is a peripheral area of the TFT substrate. The peripheral area is a non-display area on the TFT substrate excluding the first display area and the second display area, and is generally used for the provision of a trace, a drive circuit, and functional module such as the IC and FPC.

From FIG. 2A, it can be seen that the NFC coil (e.g., the coil in FIG. 2A) is arranged on the TFT substrate, specifically within a range of the area 3 (peripheral area) of the TFT substrate.

Meanwhile, in order to achieve driving and controlling of the NFC coil, the NFC coil is ultimately connected to the NFC control circuit on the IC. Here, the description is given for the situation where the NFC control circuit is disposed on the IC. Similarly, the NFC control circuit may also be disposed on the FPC or PCB, such that the NFC coil disposed on the TFT substrate can be connected to the FPC or PCB to realize driving and controlling of the NFC coil. This will not be reiterated here.

The existing electronic paper screen that integrates the NFC coil onto the TFT substrate achieves NFC functionality by placing the NFC coil in the peripheral area (non-display area) of the TFT substrate. However, due to the size limitations of the peripheral area, while this solution can realize the structure of the NFC coil, it offers limited design freedom. As a result, parameters such as the number, position, size, trace width, trace distance, DC resistance, and number of turns of the coil cannot be effectively optimized and improved. This makes it difficult to customize and develop high-performance NFC coils for specific products.

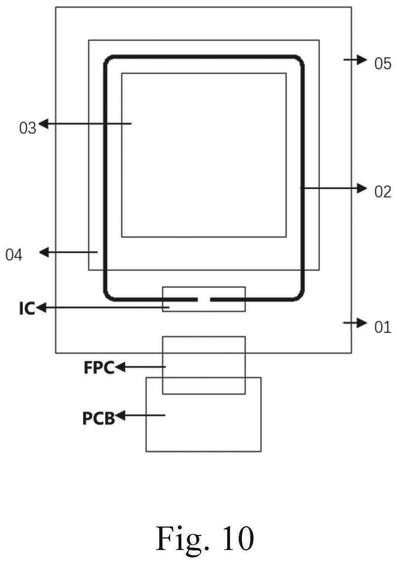

To solve the above-mentioned problem, the embodiments of the present disclosure provide an electronic paper screen to increase the degree of freedom in the design of the NFC coil in the electronic paper screen, and to improve the NFC performance of the electronic paper screen as well as the applicability of the electronic paper screen. Referring to FIG. 10, the electronic paper screen may comprise:
an electronic paper module (not shown in the figure), a TFT substrate 01, an NFC coil 02, a driver chip, and an NFC control circuit (not shown in the figure).

The TFT substrate is successively provided, from inside to outside, with a first display area 03, a second display area 04, and a peripheral area 05; the NFC coil is arranged in the peripheral area and the second display area, or disposed in the first display area, the second display area, and the peripheral area; and the first display area and the second display area form a display area of the TFT substrate.

The NFC coil is used for receiving an NFC control signal.

The NFC control circuit is connected to the NFC coil, and is used for controlling, according to the NFC control signal, the electronic paper module to perform a corresponding operation.

The driver chip is disposed on the TFT substrate, and is used for converting a received control timing and a received data signal into a voltage and a timing for driving the electronic paper module to refresh.

The electronic paper screen in the embodiments of the present disclosure is provided with an electronic paper module, a TFT substrate, an NFC coil, a driver chip, and an NFC control circuit. The TFT substrate is successively provided, from inside to outside, with a first display area, a second display area, and a peripheral area; the NFC coil is arranged in the peripheral area and the second display area, or disposed in the first display area, the second display area, and the peripheral area. The first display area and the second display area form a display area of the TFT substrate. The NFC coil is used for receiving an NFC control signal. The NFC control circuit is connected to the NFC coil, and is used for controlling, according to the NFC control signal, the electronic paper module to perform a corresponding operation. The driver chip is disposed on the TFT substrate, and is used for converting a received control timing and a received data signal into a voltage and a timing for driving the electronic paper module to refresh. Compared with prior art that disposes the NFC coil only in the peripheral area of the TFT substrate, disposing the NFC coil in both the display area and the peripheral area of the TFT substrate can enhance the design freedom of the NFC coil in the electronic paper screen. This approach allows for the flexible configuration of various parameters of the NFC coil based on usage requirements, effectively improving the structure of the electronic paper screen. It also facilitates the customization and development of high-performance NFC coils for specific products, thereby effectively enhancing both the NFC performance of the electronic paper screen and its applicability.

In one embodiment, the TFT substrate includes a Glass substrate, and a TFT array provided on the Glass substrate; and the TFT array includes the first display area, the second display area, and the peripheral area successively provided from inside to outside.

In one embodiment, the first display area is an AA area in the display area; and the second display area is a Border area in the display area.

In one embodiment, the NFC coil includes a plurality of parallel-connected coil traces.

In one embodiment, the effective display area and the peripheral area are respectively in a closed shape.

In one embodiment, each end of the NFC coil passes through the peripheral area, and penetrates into the second display area, or into the second display area and the first display area, forming a trace in which both ends of the NFC coil are connected to the NFC control circuit.

Specifically, the NFC coil penetrates into the second display area, or into the second display area and the first display area, in the following way:
penetrating into the second display area, or into the second display area and the first display area, from a side of the second display area that is parallel to a long side of the driver chip; or
penetrating into the second display area, or into the second display area and the first display area, from a side of the second display area that is perpendicular to the long side of the driver chip.

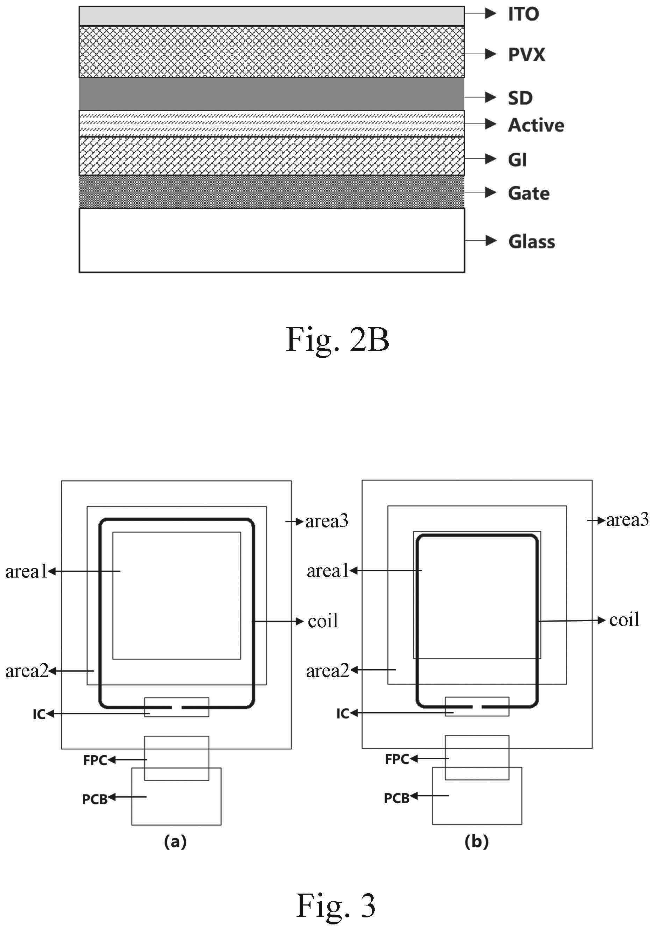

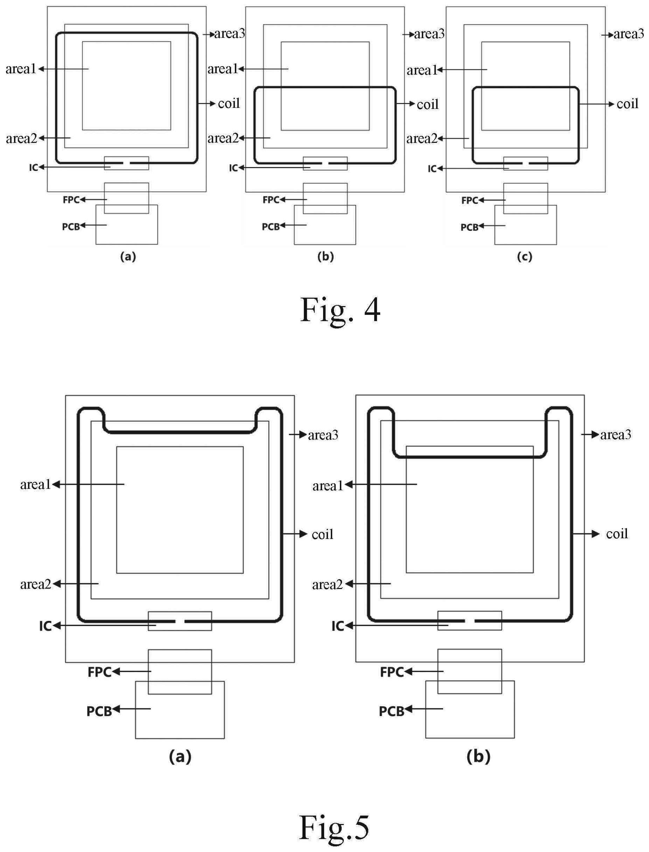

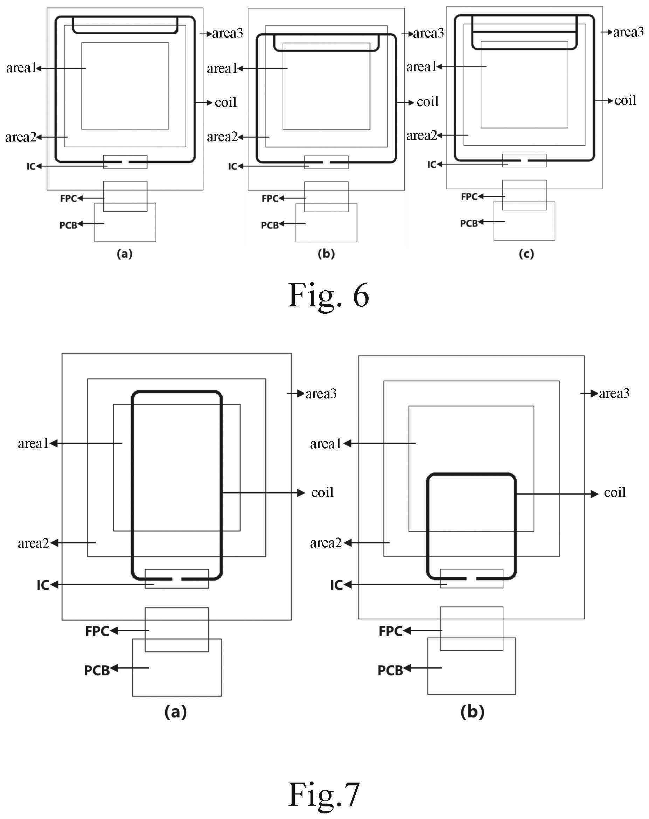

In one example, as shown in FIGS. 3 and 7, each end of the NFC coil in the (a) in FIG. 3 passes through the peripheral area, and penetrates into the second display area from a side of the second display area that is parallel to a long side of the driver chip (e.g., the IC in the figure), forming a trace in which both ends of the coil are connected to the NFC control circuit, such as forming a trace that is symmetrical with respect to a central axis of the NFC control circuit; in the cases of the (b) in FIG. 3, (c) in FIG. 4, and (a) and (b) in FIG. 7, each end of the NFC coil passes through the peripheral area, and penetrates into the first display area and the second display area from a side of the second display area that is parallel to a long side of the driver chip, forming a trace in which both ends of the coil are connected to the NFC control circuit, such as forming a trace that is symmetrical with respect to a central axis of the NFC control circuit.

In another example, the penetration into the second display area, or into the second display area and the first display area, from a side of the second display area that is parallel to a long side of the driver chip may also be, for example, penetration into the second display area, or into the second display area and the first display area, from a side away from the driver chip in the sides of the second display area that are parallel to the long side of the driver chip. As shown in FIG. 5, each end of the NFC coil in the (a) in FIG. 5 passes through the peripheral area, and penetrates into the second display area from a side away from the driver chip in the sides of the second display area that are parallel to a long side of the driver chip, forming a trace in which both ends of the coil are connected to the NFC control circuit, such as forming a trace that is symmetrical with respect to a central axis of the NFC control circuit; and each end of the NFC coil in the (b) in FIG. 5 passes through the peripheral area, and penetrates into the second display area and the first display area from a side away from the driver chip in the sides of the second display area that are parallel to a long side of the driver chip, forming a trace in which both ends of the coil are connected to the NFC control circuit, such as forming a trace that is symmetrical with respect to a central axis of the NFC control circuit.

Further, referring to the (b) in FIG. 3, and (a) and (b) in FIG. 7, a volume of the NFC coil penetrating into the first display area and the second display area can be set freely according to the actual requirements.

In another example, as shown in FIG. 4, each end of the NFC coil in the (a) in FIG. 4 passes through the peripheral area, and penetrates into the second display area from a side of the second display area that is perpendicular to a long side of the driver chip, forming a trace in which both ends of the coil are connected to the NFC control circuit, such as forming a trace that is symmetrical with respect to a central axis of the NFC control circuit; and each end of the NFC coil in the (b) in FIG. 4 passes through the peripheral area, and penetrates into the second display area and the first display area from a side of the second display area that is perpendicular to a long side of the driver chip, forming a trace in which both ends of the coil are connected to the NFC control circuit, such as forming a trace that is symmetrical with respect to a central axis of the NFC control circuit.

In one embodiment, also included are: one or more parallel-connected traces connected in parallel with the trace in which both ends of the coil are connected to the NFC control circuit; each of the parallel-connected traces penetrates through at least two of the first display area, the second display area and the peripheral area.

In one example, as shown in FIG. 6, each end of the NFC coil in the (a) in FIG. 6 passes through the peripheral area, and forms, in the peripheral area, a trace in which both ends of the coil are connected to the NFC control circuit; and the NFC coil in the (a) in FIG. 6 further includes: one parallel-connected trace that is connected in parallel with the trace in which both ends of the coil are connected to the NFC control circuit, and this parallel-connected trace penetrating through the peripheral area and the second display area.

Each end of the NFC coil in the (c) in FIG. 6 passes through the peripheral area, and forms, in the peripheral area, a trace in which both ends of the coil are connected to the NFC control circuit; and the NFC coil in the (c) in FIG. 6 further includes: two parallel-connected traces that are connected in parallel with the trace in which both ends of the coil are connected to the NFC control circuit, wherein one of the two parallel-connected traces penetrates through the peripheral area and the second display area, while the other one penetrates through the first display area, the peripheral area and the second display area.

Each end of the NFC coil in the (b) in FIG. 6 passes through the peripheral area, and forms, in the peripheral area and the second display area, a trace in which both ends of the coil are connected to the NFC control circuit; and the NFC coil in the (b) of FIG. 6 further includes: one parallel-connected trace that is connected in parallel with the trace in which both ends of the coil are connected to the NFC control circuit, and this parallel-connected trace penetrating through the first display area and the second display area.

In one embodiment, the parallel-connected trace is provided at a position on the TFT substrate opposite to a position where the NFC control circuit is located (e.g., on a side of the TFT substrate away from the NFC control circuit). To more reasonably arrange the distribution of the NFC coil on the substrate, as well as to provide sufficient space for the arrangement of the NFC coil, the parallel-connected trace can be disposed on a side of the substrate away from the NFC control circuit at a position opposite to the position where the NFC control circuit is located, as shown in FIG. 6.

In one embodiment, both ends of the NFC coil are connected to a same end of the NFC control circuit; and the both ends of the NFC coil pass through the peripheral area, and penetrate into the second display area and the first display area from a side of the second display area that is perpendicular to a long side of the driver chip and a side of the second display area that is parallel to the long side of the driver chip, respectively.

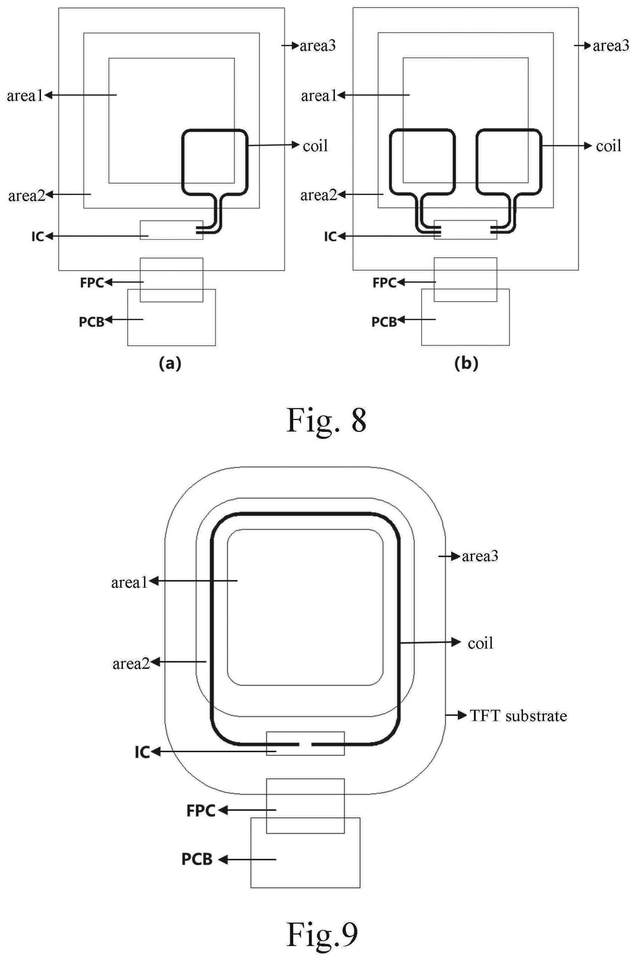

In one embodiment, as shown in FIG. 8, both ends of the NFC coil in the (a) in FIG. 8 are connected to a right end of the NFC control circuit and extend out from the right end, and penetrate into the second display area and the first display area from a side of the second display area that is perpendicular to a long side of the driver chip and a side of the second display area that is parallel to the long side of the driver chip, respectively.

In one embodiment, the NFC coil includes a plurality of parallel-connected traces.

In one example, as shown in FIG. 8, the two parallel-connected traces in the (b) in FIG. 8 are located on two sides of the second display area, respectively.

In one embodiment, the electronic paper screen further comprises: a printed circuit board and a flexible circuit board;
the NFC control circuit is integrated inside at least one of the driver chip, the printed circuit board, and the flexible circuit board; and
the driver chip and the printed circuit board are electrically connected to the TFT substrate via the flexible circuit board.

In one embodiment, the printed circuit board is used for receiving a control timing and a data signal;
the flexible circuit board is used for transmitting the control timing and the data signal to the driver chip.

In one embodiment, the TFT substrate includes a film layer structure formed by a plurality of conductive metal layers and a plurality of insulating layers; and the NFC coil is arranged in at least one of the conductive metal layers.

In one example, as shown in FIG. 2B, which is a schematic structural diagram of a TFT substrate of an electronic paper screen, the TFT substrate includes two portions, namely, a Glass substrate and a TFT array, and the TFT substrate is formed by forming the TFT array on the Glass substrate. Taking a 5mask/6mask process as an example, the film layer structure of the TFT array include, from bottom to top, a Gate layer, a GI layer (gate insulating layer), an Active layer (active layer), an SD layer, a PVX layer (passivation layer), and an ITO layer. The Gate layer is used for forming a Gate trace, a gate electrode of the TFT, and a common electrode, and is generally made of a conductive material such as Mo, Al, Nd, or Cu. The GI layer is used to isolate the Gate layer from the SD layer, and is generally made of an insulating material such as SiNx, or SiO2. The Active layer is used to form a conductive channel of the TFT, and is generally made of a semiconductor material such as a-Si, p-Si, or IGZO. The SD layer is used to form a Data trace, source and drain electrodes of the TFT, and a pixel electrode, and is generally made of a conductive material such as Mo, Al, Nd, or Cu. The PVX layer is used to isolate the SD layer from the ITO layer, and is generally made of an insulating material such as SiNx or SiO2. The ITO layer is used to form a pixel electrode, and is generally made of a transparent conductive material such as ITO.

The TFT substrate comprises two conductive metal layers, namely, the Gate layer and the SD layer, and one transparent conductive metal layer, namely, the ITO layer. By sharing at least one of the conductive metal layers of the Gate and SD layers, the NFC coil can be formed on the TFT substrate. Meanwhile, when a plurality of metal layers is used to form the NFC coil, a via hole in the insulating layer and the ITO can be used to achieve the electrical connection between different metal layers.

In the following, several specific embodiments are given to illustrate the practical applications of the device of the present disclosure. These embodiments provide an electronic paper screen in which an NFC coil is integrated on a TFT substrate by providing the NFC coil on the TFT substrate. Specifically, the NFC coil is disposed in both the display area and the peripheral area of the TFT substrate. In this way, while the NFC coil structure is implemented, the degree of freedom in the design of the NFC coil can be greatly increased, the parameters such as the number, position, size, trace width, trace spacing, DC impedance, and number of coil turns of the NFC coil can all be effectively optimized and improved according to specific products, and thus customized and high-performance NFC coil development can be performed for the specific products.

The first to seventh specific embodiments are specifically described in the following in conjunction with FIGS. 3 to 9.

It is worth noting that, in order to achieve driving and control of NFC coils, the NFC coils in the first to seventh specific embodiments are all NFC control circuits connected to the IC (i.e., driver chip), as an example. Here, the descriptions are given for a situation where the NFC control circuit is disposed on the IC. Similarly, the NFC control circuit may also be disposed on the FPC or PCB, such that the NFC coil disposed on the TFT substrate can be connected to the FPC or PCB to realize driving and controlling of the NFC coil.

Further, the NFC coil is a linear trace structure, and may penetrate into the display area and the peripheral area with traces at different positions according to different design requirements. For ease of description, an NFC coil of a rectangular structure is taken as an example in the first to seventh specific embodiments, and this is not intended to specifically limit the shape of the NFC coil. The NFC coil in the present disclosure may be structures of different shapes. Furthermore, for ease of description, throughout the first to seventh specific embodiments, the "upper trace", "left trace", "lower trace", and "right trace" that are used all refer to the different positions of the NFC coil. It is worth noting that, for example, the NFC coil is arranged on the TFT substrate, and may present a shape of a square or two concentric squares. When its shape is a square or two concentric squares, the traces in the four portions, namely, the upper, left, lower, and right portions, of the NFC coil are respectively defined as the upper trace, left trace, lower trace, and right trace of the NFC coil.

### First specific embodiment:

As shown in FIG. 3, an electronic paper screen in which an NFC coil is integrated on a TFT substrate is illustrated. For ease of description, only the portions that are related to the NFC functions, such as the TFT substrate, IC, FPC, and PCB, are shown in this planar structure diagram.
1. From the (a) in FIG. 3, it can be seen that the NFC coil is arranged on the TFT substrate. Specifically, it is provided within a range of the area 2 and area 3 of the TFT substrate. The upper trace of the NFC coil passes through the area 2, the left trace of the NFC coil passes through the area 2 and area 3, the right trace of the NFC coil passes through the area 2 and area 3, and the lower trace of the NFC coil passes through the area 3. Meanwhile, in order to achieve driving and controlling of the NFC coil, the NFC coil is ultimately connected to the NFC control circuit on the IC.
2. From the (b) in FIG. 3, it can be seen that the NFC coil is provided on the TFT substrate. Specifically, it is provided within a range of the area 1, area 2 and area 3 of the TFT substrate. The upper trace of the NFC coil passes through the area 1, the left trace of the NFC coil passes through the area 1, area 2 and area 3, the right trace of the NFC coil passes through the area 1, area 2 and area 3, and the lower trace of the NFC coil passes through the area 3. Meanwhile, in order to achieve driving and controlling of the NFC coil, the NFC coil is ultimately connected to the NFC control circuit on the IC.

### Second specific embodiment:

As shown in FIG. 4, an electronic paper screen in which an NFC coil is integrated on a TFT substrate is illustrated. For ease of description, only the portions related to the NFC functions, such as the TFT substrate, IC, FPC, and PCB, are shown in the planar structure diagram.
1. From the (a) in FIG. 4, it can be seen that the NFC coil is provided on the TFT substrate. Specifically, it is provided within a range of the area 2 and area 3 of the TFT substrate. The upper trace of the NFC coil passes through the area 2, the left trace of the NFC coil passes through the area 3, the right trace of the NFC coil passes through the area 3, and the lower trace of the NFC coil passes through the area 3. Meanwhile, in order to achieve driving and controlling of the NFC coil, the NFC coil is ultimately connected to the NFC control circuit on the IC.
2. From the (b) in FIG. 4, it can be seen that the NFC coil is provided on the TFT substrate. Specifically, it is provided within a range of the area 1, area 2 and area 3 of the TFT substrate. The upper trace of the NFC coil passes through the area 1 and area 2, the left trace of the NFC coil passes through the area 3, the right trace of the NFC coil passes through the area 3, and the lower trace of the NFC coil passes through the area 3. Meanwhile, in order to achieve driving and controlling of the NFC coil, the NFC coil is ultimately connected to the NFC control circuit on the IC.
3. From the (c) in FIG. 4, it can be seen that the NFC coil is provided on the TFT substrate. Specifically, it is provided within a range of the area 1, area 2 and area 3 of the TFT substrate. The upper trace of the NFC coil passes through the area 1, the left trace of the NFC coil passes through the area 2 and area 3, the right trace of the NFC coil passes through the area 2 and area 3, and the lower trace of the NFC coil passes through the area 3. Meanwhile, in order to achieve driving and controlling of the NFC coil, the NFC coil is ultimately connected to the NFC control circuit on the IC.

### Third specific embodiment:

As shown in FIG. 5, an electronic paper screen in which an NFC coil is integrated on a TFT substrate is illustrated. For ease of description, only the portions related to NFC functions, such as the TFT substrate, IC, FPC, and PCB, are shown in the planar structure diagram.
1. From the (a) in FIG. 5, it can be seen that the NFC coil is provided on the TFT substrate. Specifically, it is provided within a range of an area 2 and an area 3 of the TFT substrate. The upper trace of the NFC coil passes through the area 2 and area 3, the left trace of the NFC coil passes through the area 3, the right trace of the NFC coil passes through the area 3, and the lower trace of the NFC coil passes through the area 3. Meanwhile, in order to achieve driving and controlling of the NFC coil, the NFC coil is ultimately connected to the NFC control circuit on the IC.
2. From the (b) in FIG. 5, it can be seen that the NFC coil is provided on the TFT substrate. Specifically, it is provided within a range of the area 1, area 2 and area 3 of the TFT substrate. The upper trace of the NFC coil passes through the area 1, area 2 and area 3, the left trace of the NFC coil passes through the area 3, the right trace of the NFC coil passes through the area 3, and the lower trace of the NFC coil passes through the area 3. Meanwhile, in order to achieve driving and controlling of the NFC coil, the NFC coil is ultimately connected to the NFC control circuit on the IC.

### Fourth specific embodiment:

As shown in FIG. 6, an electronic paper screen in which an NFC coil is integrated on a TFT substrate is illustrated. For ease of description, only the portions related to NFC functions, such as the TFT substrate, IC, FPC, and PCB, are shown in the planar structure diagram.
1. From the (a) in FIG. 6, it can be seen that the NFC coil is provided on the TFT substrate. Specifically, it is provided within a range of the area 2 and area 3 of the TFT substrate. The upper trace of the NFC coil passes through the area 2 and area 3, the left trace of the NFC coil passes through the area 3, the right trace of the NFC coil passes through the area 3, and the lower trace of the NFC coil passes through the area 3. The upper trace of the NFC coil is formed by a plurality of traces connected in parallel to achieve the purpose of reducing trace resistance. Meanwhile, in order to achieve driving and controlling of the NFC coil, the NFC coil is ultimately connected to the NFC control circuit on the IC.
2. From the (b) in FIG. 6, it can be seen that the NFC coil is provided on the TFT substrate. Specifically, it is provided within a range of the area 1, area 2 and area 3 of the TFT substrate. The upper trace of the NFC coil passes through the area 1 and area 2, the left trace of the NFC coil passes through the area 3, the right trace of the NFC coil passes through the area 3, and the lower trace of the NFC coil passes through the area 3. The upper trace of the NFC coil is formed by a plurality of traces connected in parallel to achieve the purpose of reducing trace resistance. Meanwhile, in order to achieve driving and controlling of the NFC coil, the NFC coil is ultimately connected to the NFC control circuit on the IC.
3. From the (c) in FIG. 6, it can be seen that the NFC coil is provided on the TFT substrate. Specifically, it is provided within a range of the area 1, area 2 and area 3 of the TFT substrate. The upper trace of the NFC coil passes through the area 1, area 2 and area 3, the left trace of the NFC coil passes through the area 3, the right trace of the NFC coil passes through the area 3, and the lower trace of the NFC coil passes through the area 3. The upper trace of the NFC coil is formed by a plurality of traces connected in parallel to achieve the purpose of reducing trace resistance. Meanwhile, in order to achieve driving and controlling of the NFC coil, the NFC coil is ultimately connected to the NFC control circuit on the IC.

### Fifth specific embodiment:

As shown in FIG. 7, an electronic paper screen in which an NFC coil is integrated on a TFT substrate is illustrated. For ease of description, only the portions related to NFC functions, such as the TFT substrate, IC, FPC, and PCB, are shown in the planar structure diagram.
1. From the (a) in FIG. 7, it can be seen that the NFC coil is provided on the TFT substrate. Specifically, it is provided within a range of the area 1, area 2 and area 3 of the TFT substrate. The upper trace of the NFC coil passes through the area 2, the left trace of the NFC coil passes through the area 1, the area 3 and a lower portion of the area 2, the right trace of the NFC coil passes through the area 1, area 2 and area 3, and the lower trace of the NFC coil passes through the area 3. Meanwhile, in order to achieve driving and controlling of the NFC coil, the NFC coil is ultimately connected to the NFC control circuit on the IC.
2. From the (b) in FIG. 7, it can be seen that the NFC coil is provided on the TFT substrate. Specifically, it is provided within a range of the area 1, area 2 and area 3 of the TFT substrate. The upper trace of the NFC coil passes through the area 1, the left trace of the NFC coil passes through the area 1, area 2 and area 3, the right trace of the NFC coil passes through the area 1, area 2 and area 3, and the lower trace of the NFC coil passes through the area 3. Meanwhile, in order to achieve driving and controlling of the NFC coil, the NFC coil is ultimately connected to the NFC control circuit on the IC.

### Sixth specific embodiment:

As shown in FIG. 8, an electronic paper screen in which an NFC coil is integrated on a TFT substrate is illustrated. For ease of description, only the portions related to NFC functions, such as the TFT substrate, IC, FPC, and PCB, are shown in the planar structure diagram.
1. From the (a) in FIG. 8, it can be seen that the NFC coil is provided on the TFT substrate. Specifically, one NFC coil is provided within a range of the area 1, area 2 and area 3 of the TFT substrate. The upper trace of the NFC coil passes through the area 1, the left trace of the NFC coil passes through the area 1, the right trace of the NFC coil passes through the area 2, and the lower trace of the NFC coil passes through the area 2. Meanwhile, in order to achieve driving and controlling of the NFC coil, the NFC coil is ultimately connected to the NFC control circuit on the IC.
2. From the (b) in FIG. 8, it can be seen that the NFC coil is provided on the TFT substrate. Specifically, two NFC coils are provided within a range of the area 1, area 2 and area 3 of the TFT substrate. For the NFC coil on the left side: the upper trace of the NFC coil passes through the area 1, the left trace of the NFC coil passes through the area 2, the right trace of the NFC coil passes through the area 1, and the lower trace of the NFC coil passes through the area 2. For the NFC coil on the right side: the upper trace of the NFC coil passes through the area 1, the left trace of the NFC coil passes through the area 1, the right trace of the NFC coil passes through the area 2, and the lower trace of the NFC coil passes through the area 2. Meanwhile, in order to achieve driving and controlling of the NFC coil, the two NFC coils are ultimately connected to the NFC control circuit on the IC.

### Seventh specific embodiment:

As shown in FIG. 9, an electronic paper screen in which an NFC coil is integrated on a TFT substrate is illustrated. For ease of description, only the portions related to NFC functions, such as the TFT substrate, IC, FPC, and PCB, are shown in the planar structure diagram.

As shown in the figure, this embodiment differs from embodiment 1(a) mainly in the shapes of the area 1, area 2 and area 3: 1. the shape of the area 1 is a polygon, to be specific, a rectangle of which the four corners are rounded corners; 2. the shape of the area 2 is a polygon, to be specific, a closed loop of which the four corners of the inner edge and the four corners of the outer edge are rounded corners; 3. the shape of the area 3 is a polygon, to be specific, a closed loop of which the four corners of the inner edge and the four corners of the outer edge are rounded corners.

The design of the NFC coil in this embodiment is the same as that in embodiment 1(a), and thus will not be elaborated here. In this embodiment, for ease of description, the edge profiles of the area 1, area 2 and area 3 are all as rectangles with rounded corners. However, in actual products, the area 1 can be a closed figure of any shape, and the area 2 and area 3 can be close loops of any shapes.

In the aforementioned embodiments, for ease of description, the number of NFC coil turns is set to 1, but in actual products, it may be set to 1 or more on demand.

In the aforementioned embodiments, in order to achieve driving and controlling of the NFC coil, the NFC coil is ultimately connected to the NFC control circuit on the IC. Here, descriptions are given for a situation where the NFC control circuit is disposed on the IC. Similarly, the NFC control circuit may also be disposed on the FPC or PCB, such that the NFC coil disposed on the TFT substrate can be connected to the FPC or PCB to realize driving and controlling of the NFC coil.

In the aforementioned embodiments, as is limited by the wiring space, the width of the NFC coil may be the same or different at different positions, and the spacing of the NFC coil may also be the same or different at different positions.

In the aforementioned embodiments, the trace of the NFC coil may be implemented using a single trace, and may also be implemented using two, three, or more traces connected in parallel to reduce trace resistance. No specific requirement is imposed in this regard.

In the aforementioned embodiments, the number of NFC coils may be one, and may also be two or more. No specific requirement is imposed in this regard.

The electronic paper screen in the embodiments of the present disclosure is provided with an electronic paper module, a TFT substrate, an NFC coil, a driver chip, and an NFC control circuit. The TFT substrate is successively provided, from inside to outside, with a first display area, a second display area, and a peripheral area. The NFC coil is arranged in the peripheral area and the second display area, or disposed in the first display area, the second display area and the peripheral area. The first display area and the second display area form a display area of the TFT substrate. The NFC coil is used for receiving an NFC control signal. The NFC control circuit is connected to the NFC coil, and is used for controlling, according to the NFC control signal, the electronic paper module to perform a corresponding operation. The driver chip is disposed on the TFT substrate, and is used for converting a received control timing and a received data signal into a voltage and a timing for driving the electronic paper module to refresh. Compared with prior art that disposes the NFC coil only in the peripheral area of the TFT substrate, disposing the NFC coil in both the display area and the peripheral area of the TFT substrate can enhance the design freedom of the NFC coil in the electronic paper screen. This approach allows for the flexible configuration of various parameters of the NFC coil based on usage requirements, effectively improving the structure of the electronic paper screen. It also facilitates the customization and development of high-performance NFC coils for specific products, thereby effectively enhancing both the NFC performance of the electronic paper screen and its applicability.

In summary, the electronic paper screen disclosed in the aforementioned embodiments of the present disclosure exhibits the following characteristics: 1. the NFC coil is integrated on the TFT substrate; 2. the trace of the NFC coil is disposed in both the display area and the peripheral area; 3. the parameters such as the number, position, size, trace width, trace spacing, DC resistance, and number of coil turns of the NFC coil can be flexibly set on demand; 4. the display area and the peripheral area of the TFT substrate may be rectangular, and may also be in any other closed shapes.

The aforementioned specific embodiments further explain the object, technical solutions and advantageous effects of the present disclosure. It shall be appreciated that the above descriptions merely illustrate the specific embodiments of the present disclosure, and are not intended to limit the protection scope of the present disclosure. Any amendments, equivalent substitutions, improvements, etc. within the spirit and principle of the present disclosure shall be included in the protection scope of the present disclosure.

## Claims

1. An electronic paper screen, **characterized in that**, the electronic paper screen comprising:
an electronic paper module, a TFT substrate, an NFC coil, a driver chip, and an NFC control circuit;
wherein the TFT substrate is successively provided, from inside to outside, with a first display area, a second display area, and a peripheral area; the NFC coil is disposed in the peripheral area and the second display area, or disposed in the first display area, the second display area, and the peripheral area; the first display area and the second display area form a display area of the TFT substrate;
the NFC coil is used for receiving an NFC control signal;
the NFC control circuit is connected to the NFC coil, and is used for controlling, according to the NFC control signal, the electronic paper module to perform a corresponding operation; and
the driver chip is disposed on the TFT substrate, and is used for converting a received control timing and a received data signal into a voltage and a timing for driving the electronic paper module to refresh.

2. The electronic paper screen according to claim 1, **characterized in that** the TFT substrate comprises a Glass substrate, and a TFT array provided on the Glass substrate; and the TFT array comprises the first display area, the second display area, and the peripheral area successively provided from inside to outside.

3. The electronic paper screen according to claim 1, **characterized in that** the first display area is an AA area in the display area; and the second display area is a Border area in the display area.

4. The electronic paper screen according to claim 1, **characterized in that** each end of the NFC coil passes through the peripheral area, and penetrates into the second display area, or into the second display area and the first display area, forming a trace in which both ends of the coil are connected to the NFC control circuit.

5. The electronic paper screen according to claim 4, **characterized in that** the NFC coil penetrates into the second display area, or into the second display area and the first display area, in the following way:
penetrating into the second display area, or into the second display area and the first display area, from a side of the second display area that is parallel to a long side of the driver chip; or
penetrating into the second display area, or into the second display area and the first display area, from a side of the second display area that is perpendicular to the long side of the driver chip.

6. The electronic paper screen according to claim 4, **characterized in that**, the electronic paper screen further comprising: one or more parallel-connected traces connected in parallel with the trace in which both ends of the coil are connected to the NFC control circuit, wherein each of the parallel-connected traces penetrates through at least two of the first display area, the second display area, and the peripheral area.

7. The electronic paper screen according to claim 6, **characterized in that** the parallel-connected trace is provided at a position on the TFT substrate that is opposite to a position where the NFC control circuit is located.

8. The electronic paper screen according to claim 1, **characterized in that** both ends of the NFC coil are connected to a same end of the NFC control circuit; and the both ends of the NFC coil pass through the peripheral area, and penetrate into the second display area and the first display area from a side of the second display area that is perpendicular to a long side of the driver chip and a side of the second display area that is parallel to the long side of the driver chip, respectively.

9. The electronic paper screen according to claim 8, **characterized in that** the NFC coil comprises a plurality of parallel-connected traces.

10. The electronic paper screen according to claim 1, wherein the display area and the peripheral area are in a closed shape.

11. The electronic paper screen according to claim 1, **characterized in that**, the electronic paper screen further comprising: a printed circuit board and a flexible circuit board;
wherein the NFC control circuit is integrated inside at least one of the driver chip, the printed circuit board, and the flexible circuit board; and
the driver chip and the printed circuit board are electrically connected to the TFT substrate via the flexible circuit board.

12. The electronic paper screen according to claim 11, **characterized in that** the printed circuit board is used for receiving the control timing and the data signal; and
the flexible circuit board is used for transmitting the control timing and the data signal to the driver chip.

13. The electronic paper screen according to claim 1, **characterized in that** the TFT substrate includes a film layer structure formed by a plurality of conductive metal layers and a plurality of insulating layers; and
the NFC coil is arranged in at least one of the conductive metal layers.
